# EUROPEAN PATENT APPLICATION

(11) **EP 4 815 148 A1**
(43) Date of publication of application: **30.09.2026**
(21) Application number: 24928072.8
(22) Date of filing: 26.09.2024
(51) Int. Cl.: H01M 50/244

(54) **BATTERY CASE, BATTERY AND ELECTRICAL DEVICE**

(30) Priority: 07.03.2024 CN 202410263603
(71) Applicant: Contemporary Amperex Technology Co., Limited, Ningde, Fujian 352100 (CN)
(72) Inventor: WU, Dan, Ningde, Fujian 352100 (CN); SHAO, Ziyu, Ningde, Fujian 352100 (CN)
(74) Representative: Kraus & Lederer PartGmbB
(86) International application number: PCT/CN2024/121344
(87) International publication number: WO 2025/185141

(57) **Abstract**

A battery case, a battery and an electrical device, which relate to the technical field of batteries. The battery case comprises a case body (10) and a wire harness bracket (20). The case body (10) is provided with an accommodating cavity extending in a first direction, and the case body (10) is provided with a weight-reduction cavity (11), wherein the weight-reduction cavity (11) passes through a first side surface (12) of the case body, the first side surface (12) intersecting the first direction, and the first direction being the same as the height direction of the case body (10). The wire harness bracket (20) is located outside the accommodating cavity, one end of the wire harness bracket (20) extends into the weight-reduction cavity (11) from the first side surface (12), and at least part of the wire harness bracket (20) that is located outside the weight-reduction cavity (11) is configured to support a wire harness. The wire harness bracket (20) is mounted and fixed by means of the existing weight-reduction cavity (11) of the battery case, so as to ensure that the wire harness bracket (20) is fixed, and there is no need to provide an additional connecting hole in the battery case for mounting of the wire harness bracket (20), so that the strength of the battery case is not affected, no additional manufacturing process is added, and the battery case is simpler. The mounted and fixed wire harness bracket (20) supports the wire harness, thereby improving the stability of the wire harness and reducing the possibility of the wire harness falling off and damaging a connector.

## Description

### CROSS-REFERENCE

The present application refers to Chinese Patent Application No. 202410263603.4 filed on March 7, 2024, and entitled "BATTERY CASE, BATTERY AND ELECTRICAL DEVICE", which is incorporated herein by reference in its entirety.

### TECHNICAL FIELD

The present application relates to the technical field of batteries, and in particular, to a battery case, a battery, and an electric device.

### BACKGROUND

Energy conservation and emission reduction are the key to sustainable development of the automobile industry. Electric vehicles have become an important part of the sustainable development of the automobile industry due to their energy-saving and environmental protection advantages. For electric vehicles, the battery technology is an important factor in their development.

The battery includes a battery case and a battery cell located in the battery case. An electric signal in the battery cell is transmitted by means of a wire harness, one end of the wire harness is connected to the battery cell in the battery case, and the other end of the wire harness is configured to be connected to a connector. The wire harness sinks under the action of gravity, causing the wire harness to compress the connector and resulting in damage to the connector.

In the related art, adhesive tapes are typically used to bond the wire harness to the battery case, but the adhesive tapes are not firmly fixed, and the wire harness is prone to falling off under the transportation and vibration conditions of the battery, so that the wire harness compresses the connector, causing damage to the connector.

### SUMMARY

The present application aims to solve at least one of the technical problems existing in the background. Therefore, an objective of the present application is to provide a battery case, a battery, and an electric device, so as to reduce the compression of a wire harness on a connector, thereby reducing the possibility of damage to the connector.

Embodiments of a first aspect of the present application provide a battery case. The battery case includes: a case body, provided with an accommodating cavity extending in a first direction, where the case body is provided with a weight reducing cavity, the weight reducing cavity penetrates through a first side surface of the case body, the first side surface intersects with the first direction, and the first direction is the same as a height direction of the case body; and a wire harness bracket, located outside the accommodating cavity, where one end of the wire harness bracket extends into the weight reducing cavity from the first side surface, and at least a part of the wire harness bracket located outside the weight reducing cavity is configured to support a wire harness.

In the technical solutions of the embodiments of the present application, one end of the wire harness bracket extends into the weight reducing cavity from the first side surface, and the wire harness bracket is mounted and fixed by means of the original weight reducing cavity of the battery case to ensure the fixing of the wire harness bracket. Meanwhile, there is no need to provide an additional connecting hole in the battery case to mount the wire harness bracket, so that the strength of the battery case is not affected, and an additional manufacturing process is not added, resulting in a simpler solution. The mounted and fixed wire harness bracket supports the wire harness to improve the stability of the wire harness and reduce the possibility of the wire harness falling off and crushing the connector.

In some embodiments, the wire harness bracket includes: a mounting part, one end of the mounting part extending into the weight reducing cavity from the first side surface; a connecting part, one end of the connecting part being connected to the other end of the mounting part; and a support part, the support part being connected to the other end of the connecting part, and the support part being located outside the weight reducing cavity, where the support part and the mounting part are both located on a same side of the connecting part, and the support part is configured to support the wire harness. The wire harness bracket can realize the fixing and mounting of the wire harness bracket by means of the mounting part, and the support part is connected to another side surface of the case body, which can reduce the shaking of the support part, thereby improving the stability of the entire wire harness bracket.

In some embodiments, the support part includes: a first support arm, one end of the first support arm being connected to the other end of the connecting part; a bent arm, one end of the bent arm being connected to the other end of the first support arm; and a second support arm, one end of the second support arm being connected to the other end of the bent arm, where the second support arm and the first support arm are both located on a same side of the bent arm. The second support arm and the first support arm are both located on the same side of the bent arm, so that the support part forms a U-shaped support structure from a side view. The bent arm is the bottom of the U-shaped support structure, and the second support arm and the first support arm are two side parts of the U-shaped support structure, respectively. The wire harness may be placed in the U-shaped support structure, and meanwhile, the U-shaped support structure is provided with an opening, so that the wire harness can be conveniently taken out from the U-shaped support structure, facilitating the mounting and removal of the wire harness.

In some embodiments, a surface of the first support arm is disposed opposite to a second side surface, the second side surface is adjacent to the first side surface, and the second side surface is located on one side of the case body distal to the accommodating cavity; a plane on which a surface of the second support arm is located intersects with a plane on which the second side surface is located, and the second support arm is inclined towards the first support arm. The surface of the first support arm is parallel to the second side surface, so that the first support arm can be close to or even attach to the second side surface, thereby reducing the volume occupied by the support part. A plane on which the surface of the second support arm is located intersects with a plane on which the second side surface is located, and the second support arm is inclined towards the first support arm, so that the opening of the U-shaped support structure formed by the support part is relatively small, and the wire harness placed in the U-shaped support structure is less likely to fall off.

In some embodiments, the wire harness bracket includes two mounting parts spaced apart in a second direction and two connecting parts connected to the mounting parts in a one-to-one correspondence; the second direction is parallel to the first side surface, the second direction intersects with the first direction, and the support part is connected to the other end of each of the two connecting parts. Two mounting parts are provided, and the two mounting parts extend into different weight reducing cavities, respectively, so that there are more connecting points between the wire harness bracket and the battery case, resulting in a more stable connection. Two connecting parts are provided at the same time, so that there are more connecting points between the support part and the connecting part, resulting in a more stable connection.

In some embodiments, the other end of the second support arm is a free end. The other end of the second support arm is a free end, so that the opening of the U-shaped support structure formed by the support part is open and not closed, facilitating the placement and removal of the wire harness.

In some embodiments, the other end of the second support arm is connected to the other end of the connecting part. The other end of the second support arm is connected to the other end of the connecting part, so that the opening of the U-shaped support structure formed by the support part is closed. In other words, the U-shaped support structure is closed in a view angle parallel to the second direction, and the wire harness located in the U-shaped support structure is not prone to falling off.

In some embodiments, the first support arm is connected to the other end of one connecting part of the two connecting parts, and the second support arm is connected to the other end of the other connecting part of the two connecting parts. The first support arm and the second support arm are connected to different connecting parts, respectively, and do not interfere with each other.

In some embodiments, the wire harness bracket further includes a limiting plate, where a plate surface of the limiting plate is perpendicular to the second direction, the limiting plate is connected to the connecting part, and the limiting plate and the mounting part are located on two opposite sides of the connecting part in the first direction, respectively. The limiting plate extends out of the weight reducing cavity, and in the case that the wire harness bracket moves, the limiting plate abuts against other components of the battery, thereby displaying the movement of the wire harness bracket and improving the stability of the wire harness bracket.

In some embodiments, the wire harness bracket includes two limiting plates, and the two limiting plates are connected to two opposite side edges of the two connecting parts, respectively. The two opposite side edges of the two connecting parts are both connected to the limiting plate, so that the first connector can be placed between the two limiting plates. When the wire harness bracket moves in the second direction towards two opposite directions, the limiting plates can limit the movement of the wire harness bracket.

In some embodiments, a second side surface of the case body is provided with a mounting hole, the second side surface is adjacent to the first side surface, and the second side surface is located on one side of the case body distal to the accommodating cavity; the battery case further includes: a wire harness snap, where one end of the wire harness snap is connected to the mounting hole, the other end of the wire harness snap is located outside the mounting hole, and the wire harness snap is configured to allow the wire harness to pass through. The wire harness snap is provided to fix the wire harness again, thereby improving the stability of the wire harness and reducing the possibility of the wire harness falling off and crushing the connector.

Embodiments of a second aspect of the present application provide a battery, which includes the battery case according to the above embodiments.

Embodiments of a third aspect of the present application provide an electric device, which includes the battery according to the above embodiments, the battery being configured to provide electric energy.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

In the accompanying drawings, unless otherwise specified, the same reference numerals across multiple accompanying drawings indicate the same or similar components or elements. The accompanying drawings are not necessarily drawn to scale. It should be understood that the accompanying drawings depict only some embodiments of the present application and are therefore not to be considered as limiting the scope of the present application. To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is a schematic structural diagram of a battery case according to some embodiments of the present application;
FIG. 3 is a partial structural schematic diagram of connection between a case body and a wire harness bracket according to some embodiments of the present application;
FIG. 4 is a front view of connection between the case body and the wire harness bracket shown in FIG. 3 according to the present application;
FIG. 5 is a schematic structural diagram of a wire harness bracket according to some embodiments of the present application;
FIG. 6 is a front view of a wire harness bracket according to some embodiments of the present application;
FIG. 7 is a right view of a wire harness bracket according to some embodiments of the present application;
FIG. 8 is a schematic structural diagram of a battery case according to some other embodiments of the present application;
FIG. 9 is a partial structural schematic diagram of connection between a case body and a wire harness bracket according to some other embodiments of the present application;
FIG. 10 is a front view of connection between the case body and the wire harness bracket shown in FIG. 9 according to the present application;
FIG. 11 is a schematic structural diagram of a wire harness bracket according to some other embodiments of the present application;
FIG. 12 is a front view of a wire harness bracket according to some other embodiments of the present application; and
FIG. 13 is a right view of a wire harness bracket according to some other embodiments of the present application.

### Description of the reference numerals:

1000: vehicle; 100: battery; 200: controller; 300: motor; 10: case body; 11: weight reducing cavity; 12: first side surface; 13: second side surface; 131: mounting hole; 20: wire harness bracket; 21: mounting part; 22: connecting part; 23: support part; 231: first support arm; 2311: branch; 232: bent arm; 233: second support arm; 24: limiting plate; 30: wire harness snap; 40: end cover; 50: wire harness; 51: first wire harness branch; 52: second wire harness branch; 60: first connector; 70: second connector.

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

The battery includes a battery case and a battery cell located in the battery case. An electric signal in the battery cell is transmitted by means of a wire harness, one end of the wire harness is connected to the battery cell in the battery case, and the other end of the wire harness is configured to be connected to a connector; the connector is configured to be connected to other components in the electric device. When the battery is not mounted in the electric device, the connector is not fixed and mounted, but is freely placed. The wire harness will sink under the action of gravity, and the wire harness may compress the connector under the transportation and vibration conditions of the battery, causing damage to the connector.

In the related art, to prevent the wire harness from compressing the connector, the wire harness needs to be fixed, for example, the wire harness is adhered to the battery case by an adhesive tape, but the adhesive tape is not firmly fixed. As a result, under the transportation and vibration conditions of the battery, the adhesive tape is prone to falling off, causing the wire harness to compress the connector. In other solutions in the related art, an additional hole is drilled in the battery case, and then the wire harness is fixed by a cable tie passing through the hole. After the cable tie is fixed, the excess part is cut off, and the remaining cable tie is easy to damage other components in the battery. At the same time, the additional hole drilled in the battery case will affect the strength of the battery case, and the process is complex.

The embodiments of the present application provide a battery case. The battery case includes a case body and a wire harness bracket. The case body is provided with an accommodating cavity extending in a first direction, and the case body is provided with a weight reducing cavity. The weight reducing cavity penetrates through a first side surface of the case body, the first side surface intersects with the first direction, and the first direction is the same as the height direction of the case body. The wire harness bracket is located outside the accommodating cavity, one end of the wire harness bracket extends into the weight reducing cavity from the first side surface, and at least a part of the wire harness bracket located outside the weight reducing cavity is configured to support a wire harness. The wire harness is supported by the wire harness bracket, ensuring the stability of the wire harness. At the same time, the wire harness bracket is mounted by means of the original weight reducing cavity of the case body, and there is no need to provide an additional connecting hole in the case body to mount the wire harness bracket, so that the strength of the battery case is not affected, and an additional manufacturing process is not added, resulting in a simpler solution.

The battery case disclosed in the embodiments of the present application can be used in the battery, and the battery may, but is not limited to, be used in electric devices such as vehicles, ships, or aircraft. The power system of the electric device may be composed of the battery disclosed in the present application. This helps to reduce the possibility of damage to the connector in the battery and improve the stability of battery performance.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of explanation, the following embodiments are described by taking a vehicle 1000 as an example of the electric device according to an embodiment of the present application.

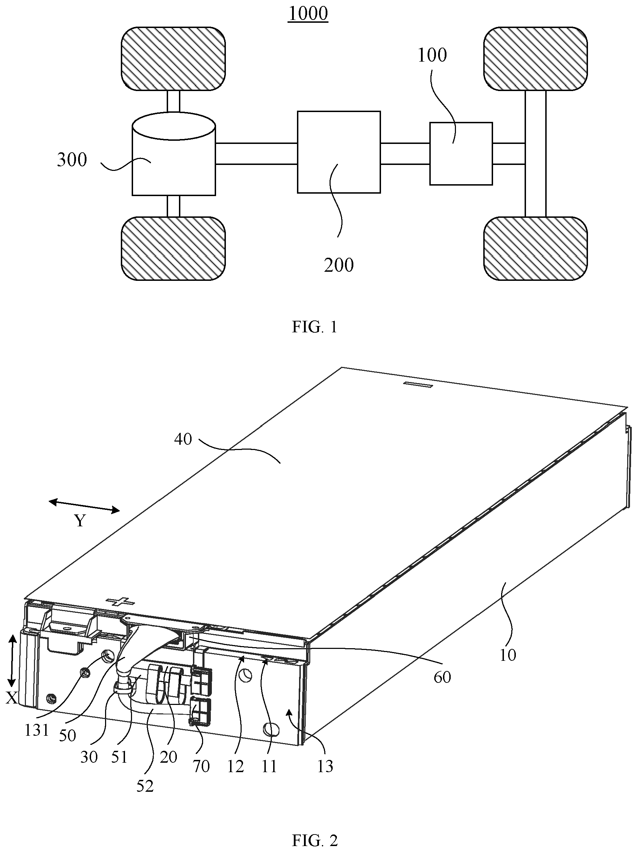

Referring to FIG. 1, FIG. 1 is a schematic structural diagram of a vehicle according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to power the vehicle 1000. For example, the battery 100 may serve as an operation power source for the vehicle 1000. The vehicle 1000 may further include a controller 200 and a motor 300. The controller 200 is configured to control the battery 100 to power the motor 300, e.g., for the operation power needed by the vehicle 1000 for start-up, navigation, and driving.

In some embodiments of the present application, the battery 100 may not only serve as an operation power source for the vehicle 1000, but also as a driving power source for the vehicle 1000 to, replacing or partially replacing fuel or natural gas, provide driving power for the vehicle 1000.

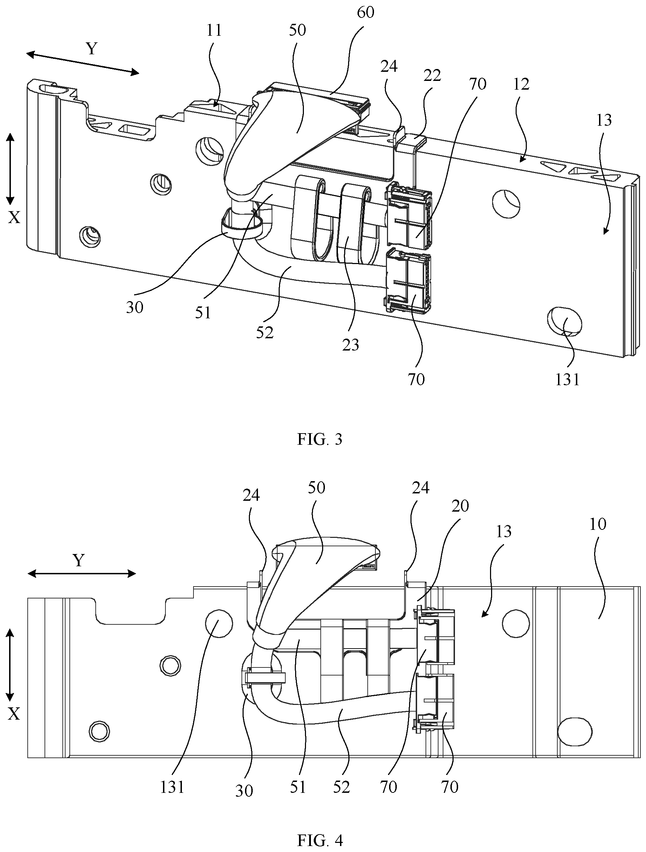

The embodiments of the present application provide a battery case. FIG. 2 is a schematic structural diagram of a battery case according to some embodiments of the present application. FIG. 3 is a partial structural schematic diagram of connection between a case body and a wire harness bracket according to some embodiments of the present application. FIG. 4 is a front view of connection between the case body and the wire harness bracket shown in FIG. 3 according to the present application. Referring to FIGs. 2 to 4, the battery case includes a case body 10 and a wire harness bracket 20. The case body 10 is provided with an accommodating cavity extending in a first direction X, and the case body 10 is provided with a weight reducing cavity 11. The weight reducing cavity 11 penetrates through a first side surface 12 of the case body 10, the first side surface 12 intersects with the first direction X, and the first direction X is the same as the height direction of the case body 10. The wire harness bracket 20 is located outside the accommodating cavity, one end of the wire harness bracket 20 extends into the weight reducing cavity 11 from the first side surface 12, and at least a part of the wire harness bracket 20 located outside the weight reducing cavity 11 is configured to support a wire harness 50.

The battery includes a battery case and battery cells, the battery cells are accommodated in the battery case, and the battery case is configured to provide accommodating space for the battery cells. The battery case may be of various structures. In some embodiments, the battery case may include a first part and a second part. The first part and the second part are mutually lidded with each other, and the first part and the second part jointly define the accommodating space for accommodating the battery cells. The first part may be of a hollow structure with one end open, and the second part may be of a plate-shaped structure. The open side of the first part is lidded with the second part, so that the first part and the second part jointly define the accommodating space. The first part and the second part may also each be of a hollow structure with one side open, and the open side of the second part is lidded with the open side of the first part. Certainly, the battery case formed by the first part and the second part may be in various shapes, such as a cylinder or a rectangular parallelepiped. FIG. 2 is merely an example. In some embodiments of the present application, referring to FIG. 2, the first part described above may be the case body 10, and the second part described above may be an end cover 40. The end cover 40 is lidded onto the opening of the accommodating cavity of the case body 10, and the battery cell is located in the accommodating cavity. As shown in FIG. 2, since the end cover 40 is lidded onto the accommodating cavity of the case body 10, the accommodating cavity is not shown in the accompanying drawings of the embodiments of the present application.

In the embodiments of the present application, the first side surface 12 may be a surface facing the opening of the accommodating cavity. In this way, when the end cover 40 is lidded onto the opening of the accommodating cavity, the end cover 40 may also be pressed against an end of the wire harness bracket 20 extending from the first side surface 12 into the weight reducing cavity 11, thereby fixing the wire harness bracket 20.

In the embodiments of the present application, a straight line parallel to the height direction of the case body 10 passes through the opening of the accommodating cavity.

In other implementations, the first side surface 12 may also be located at other positions, and then the wire harness bracket 20 is fixed in other manners. For example, the wire harness bracket 20 is bonded to the first side surface 12, or the wire harness bracket 20 is in interference fit with the weight reducing cavity 11, thereby fixing the wire harness bracket 20.

In the battery, there may be a plurality of battery cells, and the plurality of battery cells may be connected in series, in parallel, or in series-parallel. The series-parallel connection means that both series connection and parallel connection are present for the connection among the plurality of battery cells. The plurality of battery cells may be directly connected in series, in parallel, or in series-parallel, and then the whole formed by the plurality of battery cells is accommodated in the battery case. Certainly, the situation may be that in the battery, the plurality of battery cells are first connected in series, in parallel, or in series-parallel to form battery modules, and then the plurality of battery modules are connected in series, in parallel, or in series-parallel to form a whole and accommodated in the battery case. The battery may further include other structures. For example, the battery may further include a busbar component for achieving an electrical connection among the plurality of battery cells. Each battery cell may be a secondary battery or a primary battery; it may also be a lithium-sulfur battery, a sodium-ion battery, or a magnesium-ion battery, but is not limited thereto. The battery cell may be cylindrical, flat, rectangular parallelepiped, or in other shapes.

The weight reducing cavity 11 is the mold cavity of the case body 10, which can reduce the weight of the case body 10 and improve the energy density of the battery. Next, when the case body 10 is compressed, the weight reducing cavity 11 can slow down the transfer of energy, thereby reducing the impact force on the battery cells located in the case body 10 and improving the stability of the battery.

The number of the weight reducing cavities 11 is not limited and may be set according to requirements. The shape of the weight reducing cavity 11 is not limited. For example, the shape of the weight reducing cavity 11 may be cylindrical, prismatic, or other irregular shapes. In the embodiments of the present application, as shown in FIGs. 2 and 3, the shape of the weight reducing cavity 11 may include a triangular prism. Compared with weight reducing cavities 11 of other shapes, the weight reducing cavity 11 in the shape of a triangular prism is easy to manufacture due to the regular shape of the triangular prism. Moreover, the triangular prism has better stability and can enhance the strength of the battery case.

FIG. 2 shows the shape of a battery case according to the present application. In FIG. 2, the shape of the battery case is rectangular. The case body 10 may include two end plates and two side plates, the two end plates and the two side plates enclose a rectangular-like accommodating cavity, and one end of the wire harness bracket 20 extends into the weight reducing cavity of the end plate. In other implementations, one end of the wire harness bracket 20 may also extend into the weight reducing cavity of the side plate.

Illustratively, when one end of the wire harness bracket 20 extends into the weight reducing cavity of the end plate, the first side surface 12 may be one surface of the end plate.

As shown in FIG. 2, one end of the wire harness 50 is connected to a first connector 60, and the other end of the wire harness 50 is connected to a second connector 70. The first connector 60 is configured to be connected to the battery cell located in the battery case, and the second connector 70 is configured to be connected to other components in the electric device. For example, the second connector 70 is connected to a controller 200, so that the electric device can know the state of the battery cell and control the battery cell. Illustratively, the first connector 60 may be mounted on the battery case to ensure the stability of the first connector 60. When the battery is not mounted on the electric device, the second connector 70 is freely placed. When the battery is mounted on the electric device, the second connector 70 may be mounted on the electric device to ensure the stability of the second connector 70.

Referring to FIGs. 2 to 4, the wire harness 50 includes a first wire harness branch 51 and a second wire harness branch 52. The first wire harness branch 51 and the second wire harness branch 52 may both be supported by the wire harness bracket 20, or one of the first wire harness branch 51 and the second wire harness branch 52 may be supported by the wire harness bracket 20. Certainly, in other implementations, the wire harness 50 may further include other numbers of wire harness branches, and different numbers of wire harness branches may be placed on the wire harness bracket 20 as required to support the wire harness.

In the embodiments of the present application, at least a part of the wire harness bracket 20 located outside the weight reducing cavity 11 is configured to support the wire harness 50, which may be characterized in that a part of the wire harness bracket 20 located outside the weight reducing cavity 11 may support the wire harness 50, and another part of the wire harness bracket 20 located outside the weight reducing cavity 11 may also feature other functions, for example, may be used for connection.

In the embodiments of the present application, one end of the wire harness bracket 20 extends into the weight reducing cavity 11 from the first side surface 12, and the wire harness bracket 20 is mounted and fixed by means of the original weight reducing cavity 11 of the battery case to ensure the fixing of the wire harness bracket 20. Meanwhile, there is no need to provide an additional connecting hole in the battery case to mount the wire harness bracket, so that the strength of the battery case is not affected, and an additional manufacturing process is not added, resulting in a simpler solution. The mounted and fixed wire harness bracket 20 supports the wire harness to improve the stability of the wire harness and reduce the possibility of the wire harness falling off and crushing the connector.

In the embodiments of the present application, the wire harness bracket 20 does not need to be cut off, thereby reducing the possibility that the wire harness bracket 20 damages other components in the battery, and improving the reliability of the battery.

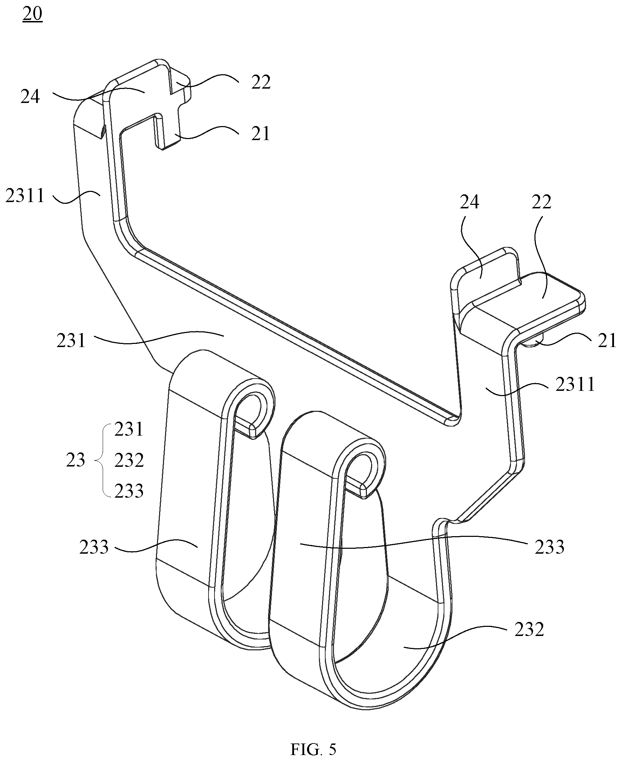

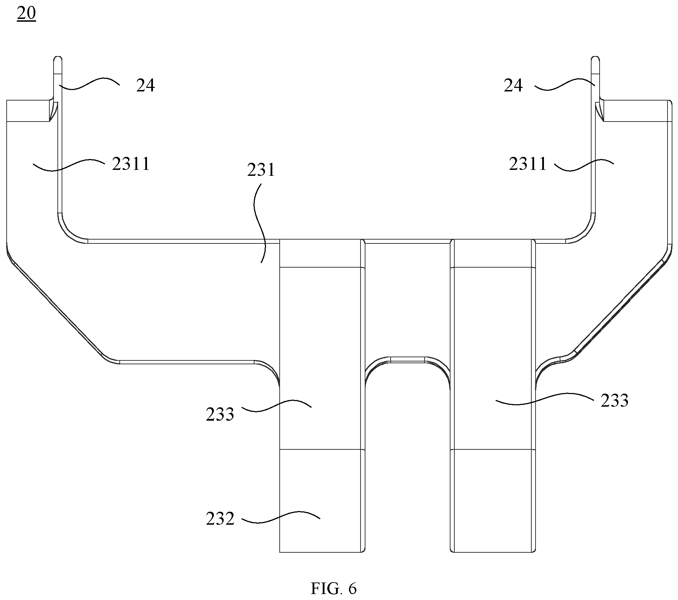

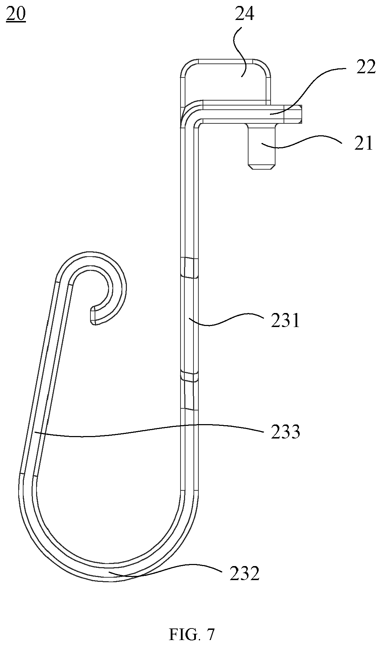

According to some embodiments of the present application, FIG. 5 is a schematic structural diagram of a wire harness bracket according to some embodiments of the present application. FIG. 6 is a front view of a wire harness bracket according to some embodiments of the present application. FIG. 7 is a right view of a wire harness bracket according to some embodiments of the present application. With reference to FIGs. 2 to 7, the wire harness bracket 20 includes a mounting part 21, a connecting part 22, and a support part 23. One end of the mounting part 21 extends into the weight reducing cavity 11 from the first side surface 12, the other end of the mounting part 21 is connected to one end of the connecting part 22, the other end of the connecting part 22 is connected to the support part 23, and the support part 23 is located outside the weight reducing cavity 11. The support part 23 and the mounting part 21 are both located on the same side of the connecting part 22, and the support part 23 is configured to support the wire harness.

In the embodiments of the present application, the mounting part 21 is configured to fix and mount the wire harness bracket 20. Illustratively, the mounting part 21 may be a strip-shaped support rod, so that one end of the mounting part 21 may extend into the weight reducing cavity 11 from the first side surface 12.

In the embodiments of the present application, the connecting part 22 is configured to connect the mounting part 21 and the support part 23. Illustratively, the connecting part 22 may be a connecting plate or a connecting rod. The connecting part 22 may be attached to the first side surface 12 to reduce the shaking of the connecting part 22 and improve the stability of the connecting part 22. In other implementations, the connecting part 22 may not be attached to the first side surface 12.

In the embodiments of the present application, the support part 23 supports the wire harness to reduce the possibility of the wire harness falling off and crushing the connector.

In the embodiments of the present application, referring to FIGs. 5 and 7, the support part 23 and the mounting part 21 are both located on the same side of the connecting part 22, so that the support part 23, the mounting part 21, and the connecting part 22 form a hook-shaped structure. The support part 23 is located in the weight reducing cavity 11, and the support part 23 is connected to another side surface of the case body to reduce the shaking of the support part 23 and improve the stability of the support part 23.

In the embodiments of the present application, the mounting part 21, the connecting part 22, and the support part 23 may be integrally formed. Alternatively, the mounting part 21, the connecting part 22, and the support part 23 are separately manufactured and then connected together. Illustratively, the mounting part 21, the connecting part 22, and the support part 23 may be connected together by welding.

In the embodiments of the present application, the wire harness bracket 20 can realize the fixing and mounting of the wire harness bracket 20 by means of the mounting part 21, and the support part 23 is connected to another side surface of the case body, which can reduce the shaking of the support part 23, thereby improving the stability of the entire wire harness bracket 20.

According to some embodiments of the present application, referring to FIGs. 5 to 7, the support part 23 includes a first support arm 231, a bent arm 232, and a second support arm 233. One end of the first support arm 231 is connected to the other end of the connecting part 22, the other end of the first support arm 231 is connected to one end of the bent arm 232, and the other end of the bent arm 232 is connected to one end of the second support arm 233. The second support arm 233 and the first support arm 231 are both located on the same side of the bent arm 232.

In the embodiments of the present application, the first support arm 231, the bent arm 232, and the second support arm 233 may be integrally formed. Alternatively, the first support arm 231, the bent arm 232, and the second support arm 233 are separately manufactured and then connected together. Illustratively, the first support arm 231, the bent arm 232, and the second support arm 233 may be connected together by welding.

In the embodiments of the present application, the number of the first support arms 231, the bent arms 232, and the second support arms 233 may be set according to requirements. Illustratively, the wire harness bracket 20 may include one first support arm 231, two bent arms 232, and two second support arms 233. One end of each of the two bent arms 232 is connected to the first support arm 231, and the other end of each of the two bent arms 232 is connected to one of the two second support arms 233 in a one-to-one correspondence.

In the embodiments of the present application, the second support arm 233 and the first support arm 231 are both located on the same side of the bent arm 232, so that the support part 23 forms a U-shaped support structure from a side view (for example, a view angle shown in FIG. 7). The bent arm 232 is the bottom of the U-shaped support structure, and the second support arm 233 and the first support arm 231 are two side parts of the U-shaped support structure, respectively. The wire harness may be placed in the U-shaped support structure, and meanwhile, the U-shaped support structure is provided with an opening, so that the wire harness can be conveniently taken out from the U-shaped support structure, facilitating the mounting and removal of the wire harness.

According to some embodiments of the present application, with reference to FIGs. 2 to 7, the surface of the first support arm 231 is disposed opposite to a second side surface 13, the second side surface 13 is adjacent to the first side surface 12, and the second side surface 13 is located on one side of the case body 10 distal to the accommodating cavity. A plane on which the surface of the second support arm 233 is located intersects with a plane on which the second side surface 13 is located, and the second support arm 233 is inclined towards the first support arm 231.

In the embodiments of the present application, the first support arm 231 and the second support arm 233 may both be of a plate-shaped structure, and the thickness of the plate-shaped structure is relatively small, so that the volume occupied by the first support arm 231 and the second support arm 233 can be reduced, and the energy density of the battery can be improved. Illustratively, the surface of the first support arm 231 is the plate surface of the first support arm 231, and the surface of the second support arm 233 is the plate surface of the second support arm 233.

In the embodiments of the present application, a plane on which the surface of the first support arm 231 is located is parallel to a plane on which the second side surface 13 is located, so that the first support arm 231 can be close to or even attach to the second side surface 13, thereby reducing the volume occupied by the support part 23. A plane on which the surface of the second support arm 233 is located intersects with a plane on which the second side surface 13 is located, and the second support arm 233 is inclined towards the first support arm 231, so that the opening of the U-shaped support structure formed by the support part 23 is relatively small, and the wire harness placed in the U-shaped support structure is less likely to fall off.

In the embodiments of the present application, the support part 23 may be made of an elastic material. In this way, when the wire harness is placed, the opening of the U-shaped support structure can be forced open, facilitating the placement of the wire harness.

According to some embodiments of the present application, with reference to FIGs. 5 to 7, the wire harness bracket 20 includes two mounting parts 21 spaced apart in a second direction Y and two connecting parts 22 connected to the mounting parts 21 in a one-to-one correspondence; the second direction Y is parallel to the first side surface 12, the second direction Y intersects with the first direction X, and the support part 23 is connected to the other end of each of the two connecting parts 22.

In some embodiments of the present application, the second direction Y is perpendicular to the first direction X. In some other embodiments of the present application, the second direction Y may not be perpendicular to the first direction X.

In the embodiments of the present application, the two mounting parts 21 extend into different weight reducing cavities 11, respectively.

In some embodiments of the present application, referring to FIGs. 5 and 6, the support part 23 may include two branches 2311, and the two branches 2311 are connected to the two connecting parts 22 in a one-to-one correspondence, respectively.

In some other embodiments of the present application, the two connecting parts 22 may be connected to the side edge of the support part 23 extending in the second direction Y.

In the embodiments of the present application, two mounting parts 21 are provided, and the two mounting parts 21 extend into different weight reducing cavities 11, respectively, so that there are more connecting points between the wire harness bracket 20 and the battery case, resulting in a more stable connection. Two connecting parts 22 are provided at the same time, so that there are more connecting points between the support part 23 and the connecting part 22, resulting in a more stable connection.

According to some embodiments of the present application, with reference to FIGs. 2 to 7, the other end of the second support arm 233 is a free end.

Referring to FIGs. 5 and 7, the free end of the second support arm 233 may be curled inward, so that the side edge of the second support arm 233 is also curled inward, thereby reducing the possibility that the side edge of the second support arm 233 damages other components in the battery and improving the reliability of the battery.

In the embodiments of the present application, the other end of the second support arm 233 is a free end, so that the opening of the U-shaped support structure formed by the support part 23 is open and not closed, facilitating the placement and removal of the wire harness.

FIGs. 2 to 7 show one of the wire harness brackets of the present application. In other implementations, the wire harness bracket may also be in other forms.

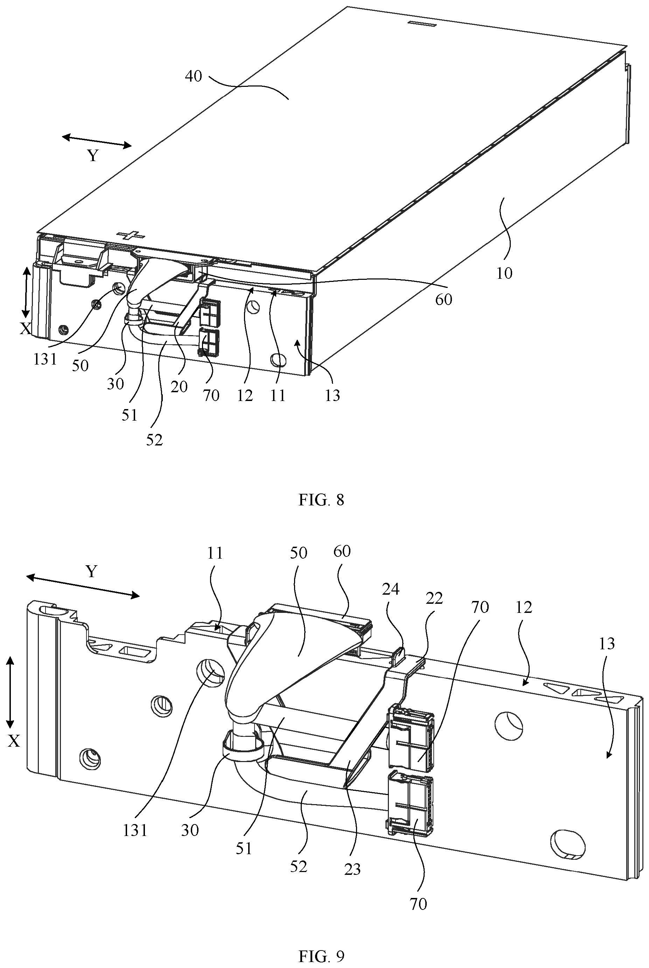

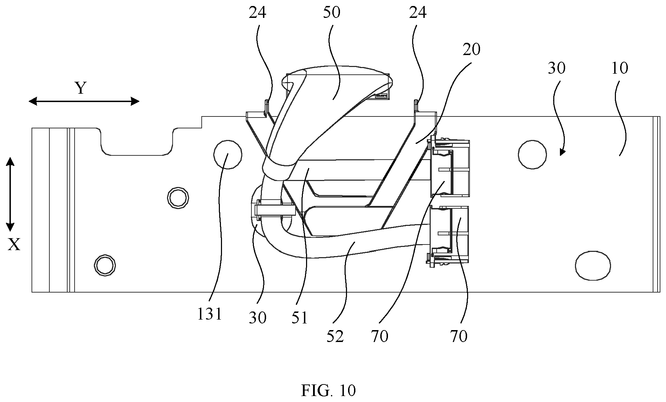

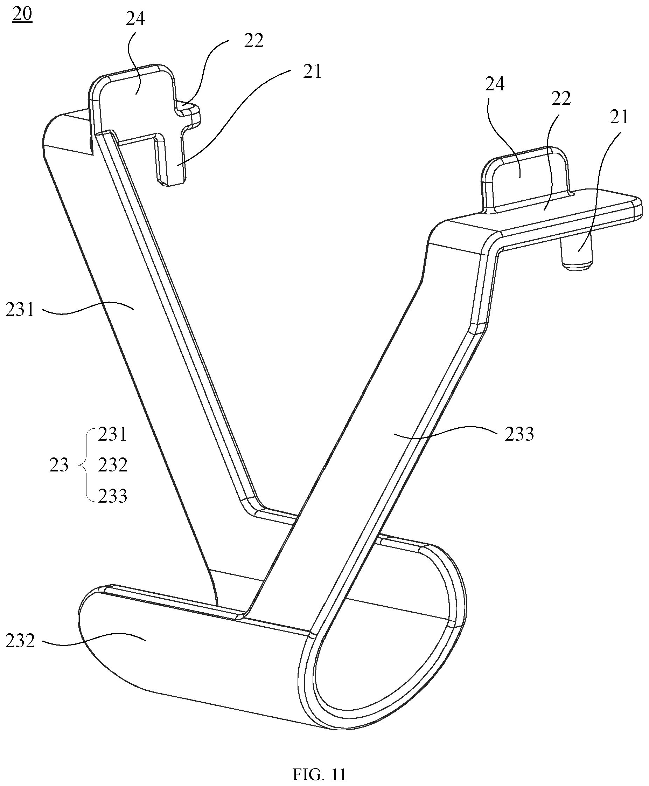

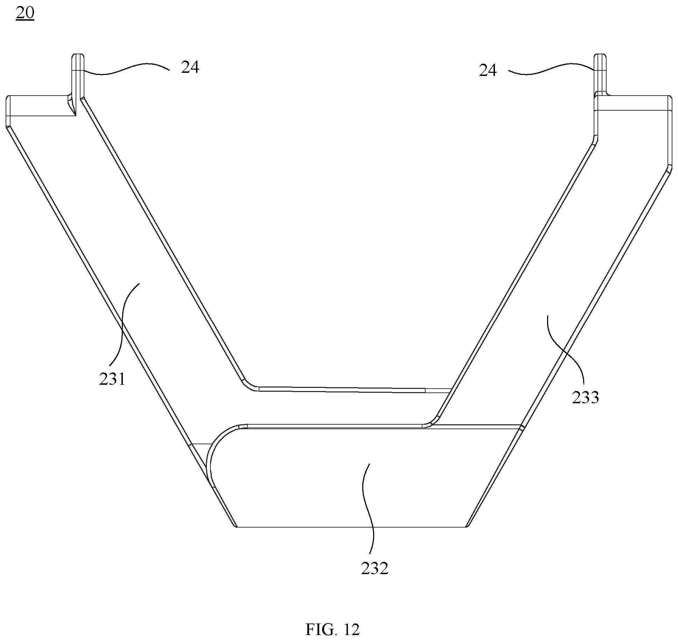

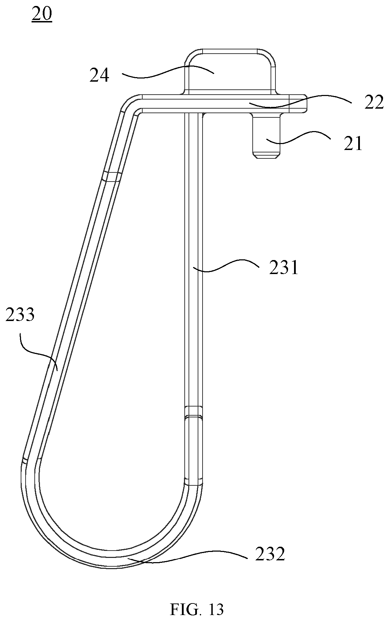

FIG. 8 is a schematic structural diagram of a battery case according to some other embodiments of the present application. FIG. 9 is a partial structural schematic diagram of connection between a case body and a wire harness bracket according to some other embodiments of the present application. FIG. 10 is a front view of connection between the case body and the wire harness bracket shown in FIG. 9 according to the present application. FIG. 11 is a schematic structural diagram of a wire harness bracket according to some other embodiments of the present application. FIG. 12 is a front view of a wire harness bracket according to some other embodiments of the present application. FIG. 13 is a right view of a wire harness bracket according to some other embodiments of the present application. With reference to FIGs. 6 to 13, the other end of the second support arm 233 is connected to the other end of the connecting part 22.

In the embodiments of the present application, the other end of the second support arm 233 is connected to the other end of the connecting part 22, so that the opening of the U-shaped support structure formed by the support part 23 is closed. In other words, the U-shaped support structure is closed in a view angle (for example, a view angle shown in FIG. 13) parallel to the second direction Y, and the wire harness located in the U-shaped support structure is not prone to falling off.

According to some embodiments of the present application, with reference to FIGs. 11 to 13, the first support arm 231 is connected to the other end of one connecting part 22 of the two connecting parts 22, and the second support arm 233 is connected to the other end of the other connecting part 22 of the two connecting parts 22.

In the embodiments of the present application, the first support arm 231 and the second support arm 233 are connected to different connecting parts 22, respectively, and do not interfere with each other.

According to some embodiments of the present application, with reference to FIGs. 2 to 7, and 8 to 13, the wire harness bracket 20 further includes a limiting plate 24, the plate surface of the limiting plate 24 is perpendicular to the second direction Y, the limiting plate 24 is connected to the connecting part 22, and the limiting plate 24 and the mounting part 21 are located on two opposite sides of the connecting part 22 in the first direction X, respectively.

Referring to FIGs. 3 and 5, the limiting plate 24 and the mounting part 21 are located on two opposite sides of the connecting part 22 in the first direction X, respectively. When the wire harness bracket 20 is mounted on the battery case, the mounting part 21 extends into the weight reducing cavity 11, and the limiting plate 24 extends out of the weight reducing cavity 11.

In the embodiments of the present application, the limiting plate 24 extends out of the weight reducing cavity 11, and in the case that the wire harness bracket 20 moves, the limiting plate 24 abuts against other components of the battery, thereby displaying the movement of the wire harness bracket 20 and improving the stability of the wire harness bracket 20.

Illustratively, the limiting plate 24 may be disposed at a position corresponding to the first connector 60, and the first connector 60 abuts against the limiting plate 24 to limit the movement of the wire harness bracket 20.

According to some embodiments of the present application, with reference to FIGs. 5 to 7, and 11 to 13, the wire harness bracket 20 includes two limiting plates 24, and the two limiting plates 24 are connected to two opposite side edges of the two connecting parts 22, respectively.

In the embodiments of the present application, the two opposite side edges of the two connecting parts 22 are both connected to the limiting plate 24, so that the first connector 60 can be placed between the two limiting plates 24. When the wire harness bracket 20 moves in the second direction Y towards two opposite directions, the limiting plates 24 can limit the movement of the wire harness bracket 20.

According to some embodiments of the present application, referring to FIGs. 2 to 4, and 8 to 10, the second side surface 13 of the case body 10 is provided with a mounting hole 131, the second side surface 13 is adjacent to the first side surface 12, and the second side surface 13 is located on one side of the case body 10 distal to the accommodating cavity. The battery case further includes a wire harness snap 30, one end of the wire harness snap 30 is connected to the mounting hole 131, the other end of the wire harness snap 30 is located outside the mounting hole 131, and the wire harness snap 30 is configured to allow the wire harness to pass through.

The second side surface 13 of the case body 10 is provided with a plurality of mounting holes 131, and the weight of the case body may also be reduced by the mounting holes 131. One of the mounting holes 131 may be used as the mounting hole for the wire harness snap 30.

In the embodiments of the present application, one end of the wire harness snap 30 is in interference fit with the mounting hole 131, so that the mounting manner is simpler, and no additional connecting component needs to be added. As a result, the weight of the battery case is less affected.

In some embodiments of the present application, the other end of the wire harness snap 30 may include a via for the wire harness to pass through. In some other embodiments of the present application, the other end of the wire harness snap 30 may include a through groove for the wire harness to pass through.

In the embodiments of the present application, the wire harness snap 30 is provided to fix the wire harness again, thereby improving the stability of the wire harness and reducing the possibility of the wire harness falling off and crushing the connector.

The embodiments of the present application provide a battery. The battery includes the battery case according to any one of the above embodiments.

The battery provided in the embodiments of the present application can improve the stability of the wire harness, reduce the possibility of the wire harness falling off and crushing the connector, and improve the stability of the battery.

The embodiments of the present application provide an electric device. The electric device includes the battery according to the above embodiments, the battery being configured to provide electric energy.

The electric device provided in the embodiments of the present application can improve the stability of the wire harness, reduce the possibility of the wire harness falling off and crushing the connector, and improve the stability of the battery.

The embodiments of the present application provide a battery case. The battery case includes a case body 10 and a wire harness bracket 20. The case body 10 is provided with an accommodating cavity extending in a first direction X, and the case body 10 is provided with a weight reducing cavity 11. The weight reducing cavity 11 penetrates through a first side surface 12 of the case body 10, the first side surface 12 intersects with the first direction X, and the first direction X is the same as the height direction of the case body 10. The wire harness bracket 20 is located outside the accommodating cavity, one end of the wire harness bracket 20 extends into the weight reducing cavity 11 from the first side surface 12, and at least a part of the wire harness bracket 20 located outside the weight reducing cavity 11 is configured to support a wire harness 50.

The wire harness bracket 20 includes a mounting part 21, a connecting part 22, a support part 23, and a limiting plate 24. One end of the mounting part 21 extends into the weight reducing cavity 11 from the first side surface 12, the other end of the mounting part 21 is connected to one end of the connecting part 22, the other end of the connecting part 22 is connected to the support part 23, and the support part 23 is located outside the weight reducing cavity 11. The support part 23 and the mounting part 21 are both located on the same side of the connecting part 22, and the support part 23 is configured to support the wire harness. The plate surface of the limiting plate 24 is perpendicular to the second direction Y, the limiting plate 24 is connected to the connecting part 22, and the limiting plate 24 and the mounting part 21 are located on two opposite sides of the connecting part 22 in the first direction X, respectively.

The support part 23 includes a first support arm 231, a bent arm 232, and a second support arm 233. One end of the first support arm 231 is connected to the other end of the connecting part 22, the other end of the first support arm 231 is connected to one end of the bent arm 232, and the other end of the bent arm 232 is connected to one end of the second support arm 233. The second support arm 233 and the first support arm 231 are both located on the same side of the bent arm 232. The surface of the first support arm 231 is disposed opposite to a second side surface 13, the second side surface 13 is adjacent to the first side surface 12, and the second side surface 13 is located on one side of the case body 10 distal to the accommodating cavity. A plane on which the surface of the second support arm 233 is located intersects with a plane on which the second side surface 13 is located, and the second support arm 233 is inclined towards the first support arm 231. The wire harness bracket 20 includes two mounting parts 21 spaced apart in a second direction Y and two connecting parts 22 connected to the mounting parts 21 in a one-to-one correspondence; the second direction Y is parallel to the first side surface 12, the second direction Y intersects with the first direction X, and the support part 23 is connected to the other end of each of the two connecting parts 22. The wire harness bracket 20 includes two limiting plates 24, and the two limiting plates 24 are connected to two opposite side edges of the two connecting parts 22, respectively.

The second side surface 13 of the case body 10 is provided with a mounting hole 131, the second side surface 13 is adjacent to the first side surface 12, and the second side surface 13 is located on one side of the case body 10 distal to the accommodating cavity. The battery case further includes a wire harness snap 30, one end of the wire harness snap 30 is connected to the mounting hole 131, the other end of the wire harness snap 30 is located outside the mounting hole 131, and the wire harness snap 30 is configured to allow the wire harness to pass through.

In an implementation of the present application, the other end of the second support arm 233 is a free end.

In another implementation of the present application, the other end of the second support arm 233 is connected to the other end of the connecting part 22. The first support arm 231 is connected to the other end of one connecting part 22 of the two connecting parts 22, and the second support arm 233 is connected to the other end of the other connecting part 22 of the two connecting parts 22.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery case, wherein the battery case comprises:
a case body (10), provided with an accommodating cavity extending in a first direction X, wherein the case body (10) is provided with a weight reducing cavity (11), the weight reducing cavity (11) penetrates through a first side surface (12) of the case body (10), the first side surface (12) intersects with the first direction X, and the first direction X is the same as a height direction of the case body (10); and
a wire harness bracket (20), located outside the accommodating cavity, wherein one end of the wire harness bracket (20) extends into the weight reducing cavity (11) from the first side surface (12), and at least a part of the wire harness bracket (20) located outside the weight reducing cavity (11) is configured to support a wire harness.

2. The battery case according to claim 1, wherein the wire harness bracket (20) comprises:
a mounting part (21), one end of the mounting part (21) extending into the weight reducing cavity (11) from the first side surface (12);
a connecting part (22), one end of the connecting part (22) being connected to the other end of the mounting part (21); and
a support part (23), the support part (23) being connected to the other end of the connecting part (22), and the support part (23) being located outside the weight reducing cavity (11),
wherein the support part (23) and the mounting part (21) are both located on a same side of the connecting part (22), and the support part (23) is configured to support a wire harness.

3. The battery case according to claim 2, wherein the support part (23) comprises:
a first support arm (231), one end of the first support arm (231) being connected to the other end of the connecting part (22);
a bent arm (232), one end of the bent arm (232) being connected to the other end of the first support arm (231); and
a second support arm (233), one end of the second support arm (233) being connected to the other end of the bent arm (232),
wherein the second support arm (233) and the first support arm (231) are both located on a same side of the bent arm (232).

4. The battery case according to claim 3, wherein a surface of the first support arm (231) is disposed opposite to a second side surface (13), the second side surface (13) is adjacent to the first side surface (12), and the second side surface (13) is located on one side of the case body (10) distal to the accommodating cavity; a plane on which a surface of the second support arm (233) is located intersects with a plane on which the second side surface (13) is located, and the second support arm (233) is inclined towards the first support arm (231).

5. The battery case according to claim 3 or 4, wherein the wire harness bracket (20) comprises two mounting parts (21) spaced apart in a second direction Y and two connecting parts (22) connected to the mounting parts (21) in a one-to-one correspondence; the second direction Y is parallel to the first side surface (12), the second direction Y intersects with the first direction X, and the support part (23) is connected to the other end of each of the two connecting parts (22).

6. The battery case according to any one of claims 3 to 5, wherein the other end of the second support arm (233) is a free end.

7. The battery case according to claim 5, wherein the other end of the second support arm (233) is connected to the other end of the connecting part (22).

8. The battery case according to claim 7, wherein the first support arm (231) is connected to the other end of one connecting part (22) of the two connecting parts (22), and the second support arm (233) is connected to the other end of the other connecting part (22) of the two connecting parts (22).

9. The battery case according to any one of claims 5 to 8, wherein the wire harness bracket (20) further comprises:
a limiting plate (24), wherein a plate surface of the limiting plate (24) is perpendicular to the second direction Y, the limiting plate (24) is connected to the connecting part (22), and the limiting plate (24) and the mounting part (21) are located on two opposite sides of the connecting part (22) in the first direction X, respectively.

10. The battery case according to claim 9, wherein the wire harness bracket (20) comprises two limiting plates (24), and the two limiting plates (24) are connected to two opposite side edges of the two connecting parts (22), respectively.

11. The battery case according to any one of claims 1 to 10, wherein a second side surface (13) of the case body (10) is provided with a mounting hole (131), the second side surface (13) is adjacent to the first side surface (12), and the second side surface (13) is located on one side of the case body (10) distal to the accommodating cavity; the battery case further comprises:
a wire harness snap (30), wherein one end of the wire harness snap (30) is connected to the mounting hole (131), the other end of the wire harness snap (30) is located outside the mounting hole (131), and the wire harness snap (30) is configured to allow the wire harness to pass through.

12. A battery, comprising the battery case according to any one of claims 1 to 11.

13. An electric device, wherein the electric device comprises the battery according to claim 12, the battery being configured to provide electric energy.
